# FASCICULE DE BREVET EUROPEEN

(11) **EP 2 407 377 B1**
(45) Date de publication et mention de la délivrance du brevet: **13.06.2012**
(21) Numéro de dépôt: 11005078.8
(22) Date de dépôt: 22.06.2011
(51) Int. Cl.: B64C 27/82

(54) **Procède et aèronef muni d`un rotor arrière basculant**
Verfahren und Luftfahrzeug, das mit einem Heck-Kipprotor ausgestattet ist
Method and aircraft equipped with a tiltable rear rotor

(30) Priorité: 13.07.2010 FR 1002936
(43) Date de publication de la demande: 18.01.2012
(73) Titulaire: EUROCOPTER, 13725 Marignane cedex (FR)
(72) Inventeur: Thomassey, Lionel, 13270 Fos sur Mer (FR)
(74) Mandataire: GPI & Associés

(56) Documents cités:
- FR-A- 1 017 976
- FR-A- 1 484 732
- FR-A- 1 536 412
- US-A- 2 385 889

## Description

La présente invention concerne un procédé de pilotage d'un aéronef à voilure tournante muni d'un rotor arrière apte à pivoter autour d'un axe de basculement, ainsi qu'un tel aéronef.

Plus particulièrement, l'invention se rapporte aux aéronefs munis d'une part d'une voilure tournante pour assurer au moins partiellement la portance de l'aéronef et, d'autre part d'un rotor arrière apte à contrer le couple généré par la voilure tournante sur la cellule de l'aéronef, ce rotor arrière pouvant pivoter autour d'un axe pour contribuer à la propulsion de l'aéronef.

En effet, les performances d'un hélicoptère sont classiquement limitées par la vitesse de rotation du rotor principal constituant la voilure tournante. La vitesse relative des pales de ce rotor principal par rapport à l'air environnant doit notamment être localement inférieure à la vitesse du son. A vitesse élevée, la durée de vie des composants est notamment réduite en raison de l'apparition de vibrations.

Par conséquent, pour obtenir un aéronef à voilure tournante pouvant se déplacer à grande vitesse pour des raisons écologiques par exemple, il est concevable d'utiliser une source propulsive additionnelle pour minimiser voire annuler le pas cyclique des pales du rotor principal afin de permettre une diminution du régime de rotation de ce rotor principal pour des grandes vitesses d'avancement.

Le document FR 1511006 suggère l'utilisation d'une hélice propulsive caudale associée au rotor arrière anticouple classique d'un hélicoptère. L'hélice caudale permet alors de décharger le rotor principal d'au moins une partie de sa fonction propulsive.

Pour optimiser les performances d'un hélicoptère, le document FR1017976 suggère d'utiliser un aéronef muni d'une voilure tournante et d'un rotor arrière apte à pivoter autour d'un axe de basculement.

Selon un premier mode de fonctionnement, le rotor arrière est utilisé pour contrer le couple généré par la voilure tournante et pour la commande en lacet.

Selon un deuxième mode de fonctionnement, le rotor arrière bascule afin de participer à la propulsion de l'aéronef, la commande en lacet étant obtenue en orientant le rotor arrière de part et d'autre d'une position neutre.

Un tel aéronef est parfois dénommé « hélicoptère à poussée vectorielle ».

Le document US 3155341 présente un convertiplane muni d'un rotor principal, d'un rotor arrière basculant et d'une aile apte à passer d'un mode hélicoptère à un mode avion.

Le document FR1536412 présente un mécanisme de commande de pivotement d'un rotor arrière d'un convertiplane. Ce mécanisme comporte une seule sortie relative à la commande de pas et deux entrées pour la commande en lacet en mode hélicoptère et la commande de poussée en mode avion, la transition d'une commande à l'autre s'opérant de façon progressive. Ainsi, en mode avion, la commande de lacet devient inopérante alors qu'en mode hélicoptère la commande de poussée est inopérante.

Dans ce contexte, la présente invention a alors pour objet de proposer un procédé tel que revendiqué pour piloter un aéronef à rotor arrière basculant ainsi qu'un tel aéronef, ledit aéronef ayant une vitesse d'avancement élevée.

Selon l'invention, un procédé pour piloter un aéronef muni d'au moins une voilure tournante comportant une pluralité de premières pales ayant un premier pas variable afin d'assurer au moins la portance de l'aéronef, l'aéronef étant muni d'un rotor arrière apte à pivoter pour passer de manière réversible d'un mode de fonctionnement anticouple durant lequel le rotor arrière est apte à contrôler le mouvement en lacet de l'aéronef à un mode de fonctionnement propulsif durant lequel le rotor arrière est apte à pivoter autour d'un axe de basculement pour contrôler le mouvement en lacet de façon vectorielle de part et d'autre d'un premier plan antéropostérieur de symétrie de l'aéronef et pour contrôler au moins partiellement la propulsion de l'aéronef, le rotor arrière comportant une pluralité de deuxièmes pales ayant un deuxième pas variable et effectuant une rotation autour d'un axe de rotation, l'axe de rotation des deuxièmes pales présentant un premier angle saillant variable avec le premier plan, est remarquable en ce que :
- durant le mode de fonctionnement anticouple, on contrôle le deuxième pas à l'aide d'un premier moyen de commande,
- durant le mode de fonctionnement propulsif, on contrôle le premier angle saillant à l'aide du premier moyen de commande et on contrôle le deuxième pas à l'aide d'un deuxième moyen de commande.
- lorsqu'un pivotement du rotor arrière autour d'un axe de basculement est requis pour passer d'un mode de fonctionnement anticouple à un mode de fonctionnement propulsif, on réduit progressivement le premier pas.

Classiquement, un repère orthonormé muni d'un axe longitudinal, d'un axe transversal et d'un axe en élévation est lié à l'aéronef. L'axe en élévation et l'axe longitudinal définissent conjointement le premier plan antéropostérieur de symétrie.

Selon une variante, l'axe de rotation est contenu dans un plan perpendiculaire au premier plan et sensiblement parallèle à un deuxième plan défini par l'axe transversal et l'axe longitudinal.

Ainsi, durant le mode de fonctionnement anticouple, le rotor arrière est contrôlé uniquement par le premier moyen de commande. En effet, le rotor arrière est alors dans une position fixe pour contrer le couple généré par la voilure tournante sur la cellule de l'aéronef.

Par contre, le rotor arrière peut passer du mode de fonctionnement anticouple durant lequel l'aéronef fonctionne comme un hélicoptère conventionnel, à un mode de fonctionnement propulsif durant lequel l'aéronef fonctionne comme un aéronef à poussé vectorielle. Durant ce mode de fonctionnement propulsif, un deuxième moyen commande pilote le deuxième pas, le premier moyen de commande pilotant l'inclinaison du rotor arrière par rapport au plan antéropostérieur en contrôlant la valeur du premier angle saillant.

Durant le mode de fonctionnement propulsif, on peut faire varier le premier angle saillant pour diriger la masse d'air traversant le rotor arrière vers l'arrière de l'aéronef. Le rotor arrière participe seul ou en combinaison avec la voilure tournante à la propulsion de l'aéronef. De plus, en ajustant la position du rotor arrière angulairement par rapport au premier plan antéropostérieur de symétrie, le pilote contrôle le lacet de l'aéronef.

Ce procédé permet de piloter aisément un aéronef à voilure tournante muni d'un rotor arrière basculant de manière à obtenir un aéronef à voilure tournante apte à atteindre des vitesses d'avancement importantes sans dégradation notable dans le temps des composants constituant la chaîne de transmission de couple de la voilure tournante.

En effet, contrairement à un hélicoptère conventionnel, il n'est pas nécessaire de basculer la voilure tournante vers l'avant pour atteindre des vitesses d'avancement importantes, un tel basculement étant susceptible de réduire la durée de vie de la voilure tournante et de sa boîte de transmission de puissance notamment.

Par ailleurs, le procédé peut comporter une ou plusieurs des caractéristiques qui suivent.

Par exemple lorsqu'un pivotement du rotor arrière est requis autour de l'axe de basculement pour passer d'un mode de fonctionnement à un autre, on passe du mode de fonctionnement anticouple au mode de fonctionnement propulsif quand le premier angle saillant devient inférieur à un seuil prédéterminé et on passe du mode de fonctionnement propulsif au mode de fonctionnement anticouple quand le premier angle saillant devient supérieur au seuil prédéterminé.

Il est à noter que, par commodité, le premier angle saillant a une valeur positive lorsque le rotor arrière est dans la position fixe requise lors du mode de fonctionnement anticouple, ce premier angle saillant ayant une valeur nulle lorsque l'axe de rotation est contenu dans le premier plan, le premier angle saillant ayant une valeur négative lorsque le rotor arrière est dans une position symétrique à ladite première position par rapport audit premier plan.

De plus, on comprend qu'il est possible de prévoir des conditions additionnelles pour éviter un changement de mode de fonctionnement provoqué par des perturbations climatiques, une rafale de vent modifiant ledit premier angle saillant notamment.

Par exemple, on peut prévoir une durée minimale de sécurité avant de procéder au changement de mode de fonctionnement. Ainsi, on change le mode de fonctionnement du rotor arrière lorsque le premier angle saillant franchit le seuil prédéterminé durant une durée minimale par exemple.

Selon un autre aspect, on peut désactiver le deuxième moyen de commande durant le mode de fonctionnement anticouple.

Par ailleurs, lorsqu'un pivotement du rotor arrière autour d'un axe de basculement est requis pour passer d'un mode de fonctionnement anticouple à un mode de fonctionnement propulsif, l'aéronef ayant une vitesse d'avancement donnée lorsque ledit pivotement est requis, on augmente progressivement le deuxième pas pour maintenir l'aéronef à une vitesse d'avancement supérieure ou égale à la vitesse d'avancement donnée.

Dès lors, le pivotement du rotor arrière ne dégrade pas les conditions de vol.

En effet, grâce à l'invention, le rotor arrière participant progressivement à la propulsion, il devient possible de décharger la voilure tournante en réduisant le pas des premières pales pour réduire la portance de cette voilure tournante, et de fait pour réduire la puissance consommée par la voilure tournante.

En outre, lorsqu'un pivotement du rotor arrière autour d'un axe de basculement est requis pour passer d'un mode de fonctionnement anticouple à un mode de fonctionnement propulsif, on procède à la diminution du premier angle saillant automatiquement jusqu'à un angle donné inférieur au seuil prédéterminé pour lequel le mouvement en lacet de l'aéronef est nul, dans le but de rapprocher l'axe de rotation des deuxièmes pales du premier plan afin de contrer le couple résiduel de la voilure tournante.

L'ordre de basculement provoque donc le pivotement automatique du rotor arrière jusqu'à ce que le premier angle saillant atteigne ledit angle donné générant un mouvement en lacet nul de l'aéronef. Cependant, on peut interrompre la diminution du premier angle saillant et donc le pivotement automatique du rotor arrière lorsque l'attitude en lacet de l'aéronef est modifiée.

En cas de perturbations détectées par un gyroscope mesurant l'angle de lacet de l'aéronef, le basculement automatique du rotor arrière est interrompu. Ces perturbations peuvent être causées soit par des événements climatiques de type rafales de vent soit par une action du pilote sur le premier moyen de commande.

Enfin, selon une option, on autorise le pivotement du rotor arrière pour passer d'un mode de fonctionnement anticouple à un mode de fonctionnement propulsif si la vitesse d'avancement de l'aéronef est supérieure à une vitesse de transition minimale.

En dessous de la vitesse de transition minimale, l'aéronef n'est en effet pas en mesure de contrer le couple généré par la voilure tournante sur la cellule dudit aéronef durant le mode de fonctionnement propulsif. Dès lors, on peut interdire la transition dans cette configuration pour éviter un incident.

La vitesse de transition minimale est déterminée par exemple par essais dans la mesure où elle dépend de la masse de l'aéronef, et de sa traînée aérodynamique notamment. Cette vitesse de transition minimale diffère donc d'un aéronef à l'autre. Par ailleurs, des marges de sécurité peuvent être prises par rapport à une vitesse de transition minimale théorique.

Le passage d'un mode de fonctionnement à un autre est donc autorisé si des conditions aérologiques prédéterminées sont remplies.

Enfin, on peut piloter au moins une surface portante en élévation de part et d'autre dudit premier plan. Cette surface portante peut être un volet agencé sur une dérive en élévation, la surface portante étant par exemple pilotée pour se situer sensiblement dans le flux d'air aspiré par le rotor arrière durant le mode fonctionnement propulsif.

On pilote en effet cette surface portante pour lutter contre le mouvement en lacet provoqué par des perturbations climatiques notamment.

L'ajout d'une dérive en élévation correctement calée permet d'assurer un cap. De plus, de part l'inertie qu'elle apporte, la dérive en élévation permet de minimiser la sensibilité de l'aéronef à des perturbations, notamment des perturbations aérodynamiques latérales. La surface portante mobile de cette dérive offre de plus à l'aéronef une capacité de réaction face aux perturbations rencontrées.

Outre un procédé, l'invention vise un aéronef tel que revendiqué apte à mettre en oeuvre ce procédé. Cet aéronef est muni d'une cellule portant au moins une voilure tournante comportant une pluralité de premières pales ayant un premier pas variable et d'un rotor arrière apte à pivoter pour passer de manière réversible d'un mode de fonctionnement anticouple durant lequel ledit rotor arrière est apte à contrôler le lacet dudit aéronef à un mode de fonctionnement propulsif par poussée vectorielle de part et d'autre d'un premier plan antéropostérieur de symétrie dudit aéronef durant lequel ledit rotor arrière est apte à pivoter autour d'un axe de basculement pour contrôler le lacet et pour contrôler au moins partiellement la propulsion dudit aéronef, le rotor arrière comportant une pluralité de deuxièmes pales ayant un deuxième pas variable et effectuant une rotation autour d'un axe de rotation, l'axe de rotation présentant un premier angle saillant variable avec ledit premier plan. Cet aéronef comporte alors :
- une boîte de transmission arrière de puissance pourvue d'une partie fixe solidarisée à ladite cellule et d'une partie mobile liée audit rotor arrière pour permettre le pivotement de ce rotor arrière autour de l'axe de basculement,
- un moyen de pivotement de ladite partie mobile,
- un premier moyen de commande contrôlant le deuxième pas durant le mode de fonctionnement anticouple et le moyen de pivotement durant le mode de fonctionnement propulsif,
- un deuxième moyen de commande contrôlant le deuxième pas durant le mode de fonctionnement propulsif,
- un dispositif de commutation pour passer d'un mode de fonctionnement à l'autre
- une unité logique pour réduire progressivement ledit premier pas lorsqu'un pivotement du rotor arrière est requis pour passer d'un mode de fonctionnement anticouple à un mode de fonctionnement propulsif.

L'aéronef peut posséder une ou plusieurs des caractéristiques additionnelles qui suivent.

Par exemple, le dispositif de commutation comporte un bouton de transition pour requérir le passage d'un mode de fonctionnement à l'autre.

De plus, le dispositif de commutation peut comporter un moyen de commutation mettant en relation :
- durant le mode de fonctionnement anticouple, le premier moyen de commande et un moyen de modification dudit deuxième pas,
- durant le mode de fonctionnement propulsif, le deuxième moyen de commande et le moyen de modification du deuxième pas, et
- durant le mode de fonctionnement propulsif, le premier moyen de commande et le moyen de pivotement.

En outre, l'aéronef comporte éventuellement un capteur angulaire pour mesurer le premier angle saillant.

Par ailleurs, cet aéronef peut comporter indifféremment au moins une surface portante en élévation mobile présentant un deuxième angle saillant variable avec le premier plan.

L'invention et ses avantages apparaîtront avec plus de détails dans le cadre de la description qui suit avec des exemples de réalisation donnés à titre illustratif en référence aux figures annexées qui représentent :
- les figures 1 à 3, des schémas explicitant le procédé selon l'invention,
- la figure 4, une coupe présentant un rotor arrière et des surfaces portantes selon l'invention,
- la figure 5, un schéma décrivant un premier mode de réalisation, et
- la figure 6, un schéma présentant un deuxième mode de réalisation ayant un rotor arrière en mode de fonctionnement anticouple, et
- la figure 7, un schéma présentant un deuxième mode de réalisation ayant un rotor arrière en mode de fonctionnement propulsif.

Les éléments présents dans plusieurs figures distinctes sont affectés d'une seule et même référence.

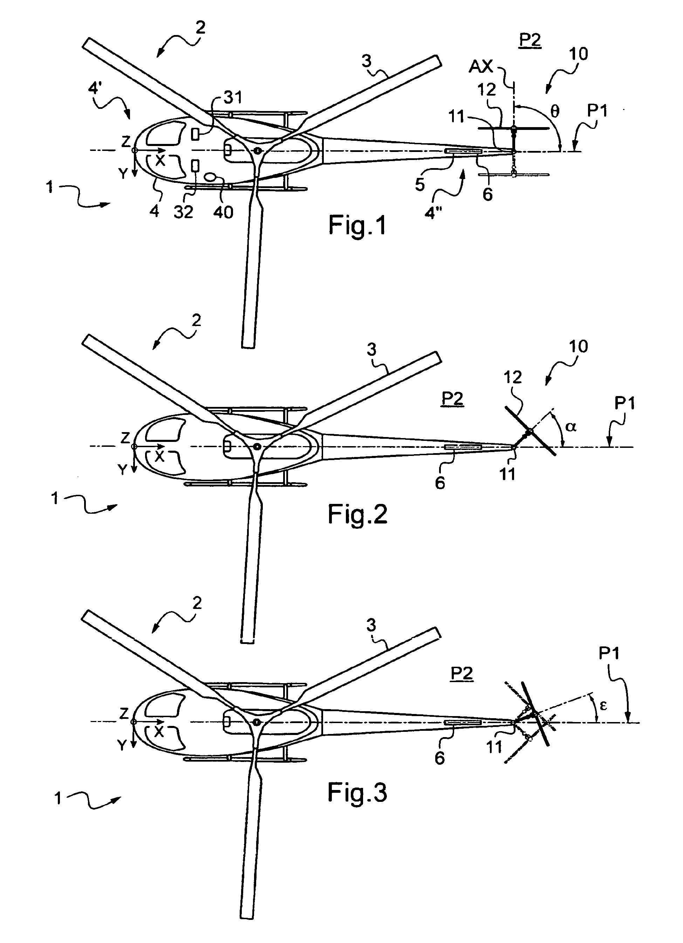

On note que trois directions X, Y et Z orthogonales les unes par rapport aux autres sont représentées sur les figures 1 à 4.

La direction X représente l'axe longitudinal de l'aéronef schématisé alors qu'une autre direction Y représente l'axe transversal de cet aéronef.

Enfin, une troisième direction Z est dite d'élévation et correspond à l'axe en élévation de l'aéronef.

La figure 1 présente un aéronef 1 muni d'une cellule 4 s'étendant longitudinalement le long d'un premier plan P1 antéropostérieur de symétrie en élévation d'une extrémité avant 4' vers une extrémité arrière 4". On note que le premier plan P1 est défini par l'axe longitudinal X et l'axe en élévation Z.

La cellule 4 porte une voilure tournante 2 munie d'un rotor principal comportant une pluralité de premières pales 3. L'aéronef possède alors des organes de modification du premier pas des premières pales 3, tels qu'un ensemble de plateaux cycliques commandé par un manche cyclique apte à faire varier cycliquement le premier pas des premières pales 3 et un levier de pas collectif apte à faire varier collectivement le premier pas de l'ensemble des premières pales 3.

De plus, l'extrémité arrière 4" de la cellule 4 porte un rotor arrière 10 muni d'une pluralité de deuxièmes pales 12 effectuant une rotation autour d'un axe de rotation AX, le deuxième pas des deuxièmes pales 12 étant modifiable.

Le rotor arrière 10 peut en outre effectuer une rotation autour d'un axe de basculement 11 pour passer d'un mode de fonctionnement anticouple durant lequel l'aéronef se comporte comme un hélicoptère conventionnel, à un mode de fonctionnement propulsif durant lequel l'aéronef est assimilable à un aéronef à poussée vectorielle. Dès lors, durant le mode fonctionnement anticouple le rotor arrière est maintenu fixement dans une position donnée, alors que durant le mode de fonctionnement propulsif le rotor arrière 10 peut effectuer une rotation autour de l'axe de basculement.

En référence à la figure 1, l'axe de rotation AX peut donc effectuer une rotation autour de l'axe de basculement 11 en évoluant dans un deuxième plan P2, par exemple orthogonal au premier plan P1 et parallèle à un plan défini par les axes longitudinal X et transversal Y de l'aéronef.

Durant le mode de fonctionnement anticouple, cet axe de rotation AX est fixe en étant par exemple orthogonal au premier plan P1 pour contrecarrer le couple généré par la voilure tournante 2 sur la cellule 4. L'axe de rotation AX présente alors un premier angle saillant θ séparant l'axe de rotation AX du premier plan P1, ce premier angle saillant θ étant éventuellement un angle droit durant le mode de fonctionnement anticouple. Plus précisément, le premier angle saillant θ sépare l'axe de rotation AX de l'intersection des premier et deuxième plans P1, P2.

A contrario, durant le mode de fonctionnement propulsif, l'axe de rotation AX peut effectuer une rotation autour de l'axe de basculement 11 afin de diriger la masse d'air traversant le rotor arrière 10 vers l'arrière de l'aéronef. Le rotor arrière 10 pivote donc de part et d'autre du premier plan P1 pour d'une part participer à la propulsion de l'aéronef et d'autre part contrôler le mouvement en lacet de cet aéronef. Par exemple, le premier angle saillant θ varie dans une plage de 180° en allant de la position du rotor arrière 10 représentée en traits pleins sur la figure 1 vers la position du rotor arrière 10 représentée en pointillés sur cette figure 1.

Pour piloter le rotor arrière 10, le pilote utilise un premier moyen de commande 31, tel qu'un palonnier, et un deuxième moyen de commande 32, un bouton poussoir trois états et / ou un bouton rotatif analogique par exemple.

Durant le mode fonctionnement anticouple, on utilise plus précisément le premier moyen de commande 31 pour modifier le deuxième pas des deuxième pales 12 du rotor arrière 10. Ainsi, à l'aide du premier moyen de commande 31, le pilote contrôle le lacet de l'aéronef 1 en pilotant l'amplitude de la poussée générée par ce rotor arrière 10.

En parallèle le deuxième moyen de commande 32 est désactivé par sécurité.

Par contre, durant le mode de fonctionnement propulsif, on utilise le premier moyen de commande 31 pour orienter le rotor arrière 10 par rapport au premier plan P1 en pilotant la valeur du premier angle saillant θ, et le deuxième moyen de commande 32 pour modifier le deuxième pas des deuxième pales 12. Dès lors, le pilote contrôle toujours le lacet de l'aéronef à l'aide du premier moyen de commande 31, mais contrôle la vitesse d'avancement de l'aéronef à l'aide du deuxième moyen de commande 32 notamment.

Par ailleurs, l'aéronef peut posséder au moins une surface portante 6 en élévation mobile, telle qu'un volet agencé sur une dérive verticale. Conformément au procédé selon l'invention, on peut piloter cette surface portante 6 pour la faire pivoter de part et d'autre du premier plan P1. Cette surface portante peut être commandée par le premier moyen de commande 31' afin par exemple d'être agencée dans le flux d'air aspiré par le rotor arrière 10. Un moyen de commande logique peut aussi commander cette surface portante 6 en fonction d'informations gyroscopiques pour lutter contre une inclinaison temporaire en lacet de l'aéronef, provoquée par exemple par une perturbation aérologique.

Pour passer du mode de fonctionnement anticouple au mode de fonctionnement propulsif, l'aéronef comporte un moyen de commutation 40.

Le pilote utilise ce moyen de commutation 40 pour changer de mode fonctionnement. Selon une variante, on comprend qu'un système de pilotage automatique peut aussi actionner ce moyen de commutation 40.

Dès lors, lorsque le pivotement du rotor arrière 10 autour de l'axe de basculement 11 est requis pour que le rotor arrière 10 passe du mode de fonctionnement anticouple au mode de fonctionnement propulsif, un moyen de pivotement non représenté sur la figure 1 met automatiquement en rotation le rotor arrière 10 au cours d'une phase de transition.

Toutefois, selon une variante de l'invention, on autorise la rotation du rotor arrière 10 uniquement si la vitesse d'avancement de l'aéronef est supérieure à une vitesse de transition minimale prédéterminée.

En référence à la figure 2, lorsque le premier angle saillant θ devient inférieur à un seuil prédéterminé α, on passe du mode de fonctionnement anticouple au mode fonctionnement propulsif. L'action des premier et deuxième moyens de commande 31, 32 varie alors.

En référence à la figure 3, la phase de transition et donc la rotation automatique du rotor arrière 10 autour de l'axe de basculement 11 est stoppée :
- définitivement quand le premier angle saillant θ atteint un angle donné ε, cet angle donné ε étant inférieur au seuil prédéterminé α,
- au moins momentanément quand l'attitude en lacet de l'aéronef est modifiée, par exemple d'un angle minimal durant une durée minimale sous l'action d'une rafale de vent ou d'une manoeuvre du pilote par exemple.

Par ailleurs, durant le pivotement automatique du rotor arrière 10 visant à rapprocher l'axe de rotation AX du premier plan P1, lors du passage du mode de fonctionnement anticouple au mode de fonctionnement propulsif du rotor arrière 10, on peut augmenter progressivement le deuxième pas pour maintenir l'aéronef à une vitesse d'avancement supérieure ou égale à une vitesse d'avancement donnée. Favorablement, la vitesse d'avancement donnée est égale à la vitesse d'avancement de l'aéronef lorsque le changement de mode est requis.

De plus, durant ce pivotement automatique on peut réduire progressivement le premier pas des premières pales 3 de la voilure tournante 2.

Pour passer du mode de fonctionnement propulsif au mode de fonctionnement anticouple, le pilote requiert le basculement du rotor arrière à l'aide du dispositif de commutation.

Le rotor arrière 10 pivote alors autour de l'axe de basculement 11 pour se retrouver dans la position fixe représentée sur la figure 1. De plus, lorsque le premier angle saillant θ devient supérieur au seuil prédéterminé a le premier moyen de commande permet de commander le deuxième pas, le deuxième moyen de commande devenant inopérant.

Il est à noter qu'une temporisation peut être mise en place afin de garantir que l'augmentation du premier angle saillant θ au-delà du seuil prédéterminé α n'est pas provoquée par des perturbations aérologiques.

De plus, parallèlement au pivotement du rotor arrière 10, on peut réduire progressivement le deuxième pas des deuxièmes pales 12 du rotor arrière 10 et augmenter progressivement le premier pas des premières pales 3 de la voilure tournante 2.

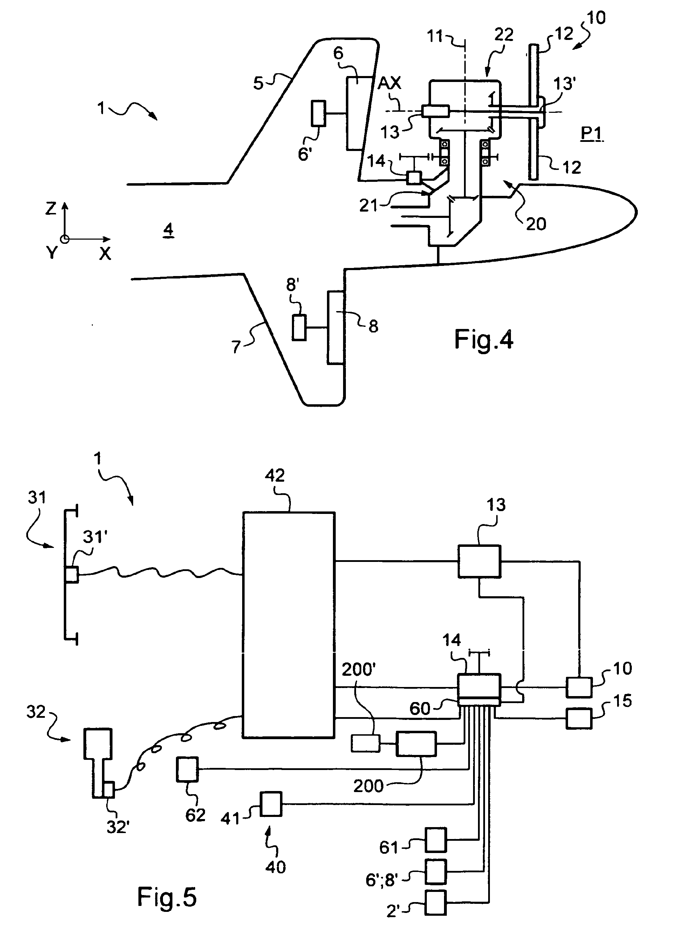

La figure 4 présente une coupe d'un rotor arrière 10 d'un aéronef 1 selon l'invention. Le rotor arrière 10 est agencé sur l'extrémité arrière 4" de la cellule 4 de l'aéronef 1.

Dès lors, l'aéronef 1 comporte une boîte de transmission arrière 20 de puissance mise en mouvement par une installation motrice non représentée, la boîte de transmission arrière entraînant en rotation les deuxièmes pales 12 autour d'un axe de rotation AX.

Cette boîte de transmission arrière 20 est munie d'un partie fixe 21 solidaire de la cellule 4 par une liaison 21" et mise en mouvement par l'installation motrice. De plus, la boîte de transmission arrière 20 est munie d'un partie mobile 22 portant et entraînant le rotor arrière 10, la partie mobile 22 coopérant avec la partie fixe 21.

Par suite, l'aéronef 1 comprend un moyen de pivotement 14 apte à engendrer une rotation de la partie mobile 22 par rapport à la partie fixe 21 de la boîte de transmission arrière 20 autour d'un axe de basculement 11.

Ce moyen de pivotement 14 est par exemple un moteur électrique solidaire de la cellule 4 et/ ou de la partie fixe 21 de la boîte de transmission arrière 20. Ce moteur électrique étant en prise avec un engrenage périphérique de la partie mobile. On comprend que la partie mobile 22 est en rotation par rapport à la partie fixe 21 solidaire de la cellule 4, grâce à une liaison en rotation réalisée aux moyens de roulements ou de paliers lisses autolubrifiés.

En outre, l'aéronef comporte un moyen de modification du deuxième pas des deuxièmes pales 12 du rotor arrière 10. Ce moyen de modification peut posséder une servocommande 13 munie d'un arbre de sortie 13' lié aux deuxièmes pales, via un système dénommé « araignée » par l'homme du métier par exemple. Ce moyen de modification du deuxième pas est alors solidarisé à la partie mobile 22 de la boite de transmission arrière 20, plus précisément à un carénage externe de cette partie mobile 22.

Durant le mode fonctionnement anticouple du rotor arrière 10, le dispositif de commutation 40 met en relation le premier moyen de commande 31 et la servocommande 13. Au contraire, durant le mode de fonctionnement propulsif, le dispositif de commutation 40 met en relation d'une part le premier moyen de commande 31 et le moyen de pivotement 14, et, d'autre part, le deuxième moyen de commande 32 et la servocommande 13.

La figure 4 met aussi en évidence la présence optionnelle de deux surfaces portantes en élévation 6, 8 agencées respectivement sur deux dérives en élévation 5, 7. Chaque surface portante est inclinable de part et d'autre du premier plan P1 par un moyen d'inclinaison 6', 8' de type moteur électrique par exemple.

La figure 5 présente un schéma explicitant un premier mode de réalisation.

Indépendamment du mode de réalisation, le dispositif de commutation 40 peut comporter un bouton de transition 41. Par exemple, le bouton de transition est un interrupteur à deux positions, une première position pour le mode de fonctionnement anticouple et une deuxième position pour le mode de fonctionnement propulsif.

De plus, le dispositif de commutation 40 peut comprendre un moyen de commutation 42 relié au premier moyen de commande 31 et au deuxième moyen de commande 32. Par exemple, le premier moyen de commande 31 comporte un premier capteur de position 31' envoyant un premier signal électrique au moyen de commutation 42, le deuxième moyen de commande 32 comportant un deuxième capteur de position 32' envoyant un deuxième signal électrique au moyen de commutation 42.

En outre, le moyen de commutation est lié à la servocommande 13 ainsi qu'au moyen de pivotement 14.

Selon le premier mode de réalisation, le moyen de commutation est alors une unité de commutation électronique pourvue d'un circuit électrique mettant en relation le premier moyen de commande 31 et la servocommande 13 durant le mode de fonctionnement anticouple, puis le premier moyen de commande 31 et le moyen de pivotement 14 ainsi que le deuxième moyen de commande 32 et la servocommande 13 durant le mode fonctionnement propulsif.

Par ailleurs, l'aéronef 1 peut comporter une unité logique 60 liée au bouton de transition 41. Cette unité logique est accolée au moyen de pivotement 14 sur la figure 5 mais pourrait faire partie du moyen de commutation 42 par exemple. Selon une autre variante, le moyen de commutation 42 et l'unité logique font partie du système de pilotage automatique de l'aéronef.

Cette unité logique reçoit alors les instructions provenant du bouton de transition 41 et communique des consignes au moyen de commutation 42.

On note que l'unité logique peut communiquer par ailleurs avec
- un capteur angulaire 15 apte à transmettre une information relative à la position du rotor arrière 10,
- un moyen de mesure 200 de la vitesse d'avancement de l'aéronef, muni d'un tube de Pitot 200' par exemple,
- un gyroscope 61,
- le moyen d'inclinaison 6', 8' d'une surface portante 6, 8,
- des organes de modifications de pas 2' des premières pales 3 de la voilure tournante, par le biais d'un système de pilotage automatique de l'aéronef ou de vérins disposés en série et / ou en parallèle sur des chaînes cinématiques de commande dudit premier pas par exemple.

Cette unité logique peut être une carte électronique, munie par exemple d'un processeur ou tout autre moyen équivalent, tel qu'un circuit électronique logique éventuellement.

Quand le pilote veut passer du mode fonctionnement anticouple au mode de fonctionnement propulsif, ce pilote bascule le bouton de transition sur la deuxième position correspondant au mode de fonctionnement propulsif. Un signal électrique est envoyé à l'unité logique 60 pour requérir les manoeuvres adéquates.

L'unité logique 60 est accolée, voire intégrée au moyen de pivotement sur l'exemple représenté. Toutefois, on comprend que cette unité logique peut être disposée à un endroit différent sans sortir du cadre de l'invention.

Cette unité logique peut vérifier durant une étape préliminaire si les conditions nécessaires à la transition sont réunies. Ainsi, l'unité logique fait appel au moyen de mesure 200 pour déterminer si la vitesse d'avancement de l'aéronef est supérieure à une vitesse de transition minimale prédéterminée.

Dans la négative, l'unité logique 60 avertit le pilote, par un moyen d'alerte 62 sonore ou visuel par exemple. Cette unité logique peut aussi maintenir le bouton de transition dans sa position initiale.

Si les conditions nécessaires à la transition sont réunies, l'unité logique permet l'alimentation électrique du moyen de pivotement. Ainsi, le moteur de pivotement ne peut pas agir sur le rotor arrière lorsque l'aéronef se comporte comme un hélicoptère conventionnel, à savoir lorsque le rotor arrière fonctionne selon le mode de fonctionnement anticouple.

Ensuite, l'unité logique 60 ordonne au moyen de pivotement de basculer le rotor arrière autour de l'axe de basculement 11.

Lorsque le capteur angulaire 15 informe l'unité logique que premier angle saillant θ passe en dessous d'un seuil prédéterminé α, cette unité logique 60 ordonne au moyen de commutation de relier le premier moyen de commande 31 et le moyen de pivotement 14 ainsi que le deuxième moyen de commande 32 et la servocommande 13.

On rappelle que, par convention, le premier angle saillant θ a une valeur positive lorsque le rotor arrière est dans la position fixe requise lors du mode de fonctionnement anticouple, cet premier angle saillant θ ayant une valeur nulle lorsque l'axe de rotation AX est contenu dans le premier plan P1, le premier angle saillant θ ayant une valeur négative lorsque le rotor arrière est dans une position symétrique à ladite première position par rapport audit premier plan.

Par ailleurs, l'unité logique 60 continue d'ordonner le pivotement automatique du rotor arrière, ce pivotement engendrant une diminution automatique du premier angle saillant θ selon la convention prise précédemment.

L'unité logique stoppe le pivotement automatique quand une des deux conditions suivantes est atteinte :
- le premier angle saillant θ atteint un angle donné ε, l'angle donné ε étant inférieur au seuil prédéterminé α,
- l'attitude en lacet de l'aéronef est modifiée, l'unité logique étant informée d'une telle modification de l'attitude en lacet de l'aéronef par un gyroscope 61.

En parallèle à la diminution automatique, l'unité logique 60 peut requérir l'augmentation progressive du deuxième pas des deuxièmes pales du rotor arrière 10 via la servocommande 13 et la diminution du premier pas des premières pales de la voilure tournante, via les organes de modifications de pas 2'.

Enfin, l'unité logique est à même de contrôler des surfaces portantes en élévation 6', 8', en fonction d'informations provenant du gyroscope 61 ou de la position du premier moyen de commande 31 par exemple.

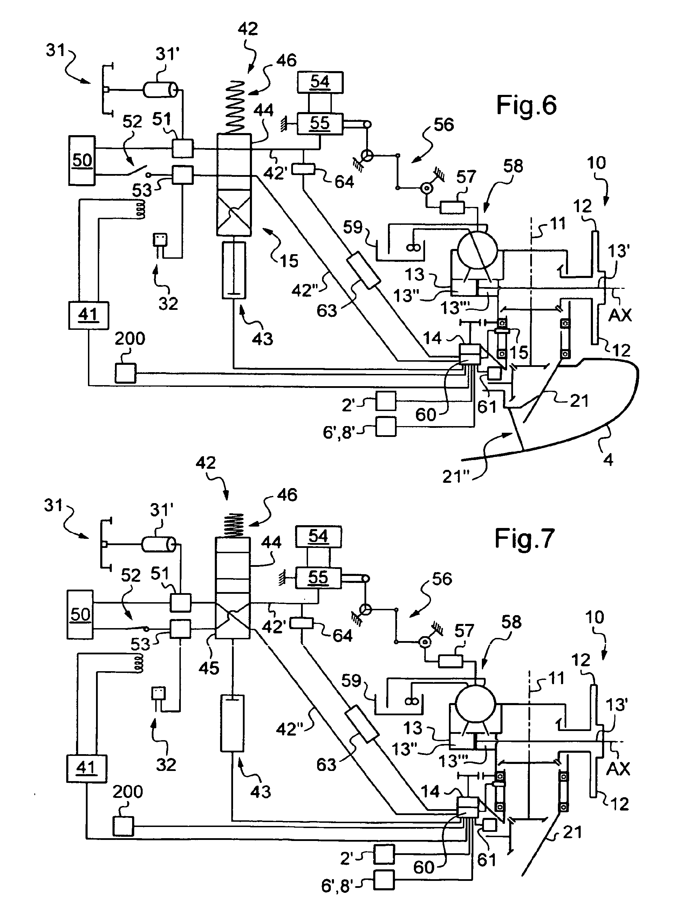

Les figures 6 et 7 présentent un deuxième mode de réalisation.

L'aéronef comporte un générateur électrique 50 relié à une première porte logique 51 en relation avec un capteur de position 31' du premier moyen de commande 31. La première porte logique 51 est reliée au moyen de commutation 42, la première porte logique 51 étant d'un type usuel en étant par exemple muni d'un transistor.

De plus, le générateur électrique 50 est relié à un deuxième codeur 53 via un interrupteur 52, une deuxième porte logique 53 étant en relation avec le deuxième moyen de commande 32. La deuxième porte logique 53 est reliée au moyen de commutation 42, la deuxième porte logique 53 étant d'un type usuel en étant par exemple muni d'un transistor.

Dans ces conditions, le bouton de transition 41 est lié à une bobine ouvrant l'interrupteur 52 lorsque ce bouton de transition 41 est dans une première position correspondant au mode de fonctionnement anticouple du rotor arrière, la bobine fermant l'interrupteur 52 lorsque le bouton de transition 41 est dans une deuxième position correspondant au mode de fonctionnement propulsif.

Le moyen de commutation 42 est un commutateur deux positions à deux voies de sortie 42', 42".

Une première voie 42' permet la transmission d'une consigne à un vérin de commande 55 alimenté électriquement ou hydrauliquement par un organe dédié 54. Le vérin de commande 55 est alors relié à un distributeur hydraulique 58. d'une servocommande 13 par une chaîne cinématique 56 et un moyen suiveur 57 assurant l'action sur le distributeur hydraulique qu'elle que soit la position angulaire du rotor arrière.

Le distributeur hydraulique 58 présenté est un distributeur rotatif communiquant avec un réservoir 59, ce distributeur hydraulique 58 pouvant alimenter en fluide une première et une deuxième chambres 13", 13"' de la servocommande.

En s'étendant ou en se rétractant en fonction de la consigne reçue, le vérin de commande 55 requiert l'alimentation en fluide de la première ou de la deuxième chambre 13", 13"' de la servocommande. L'arbre de sortie 13' s'étend lorsque la première chambre 13" se remplit pour par exemple augmenter le deuxième pas des deuxièmes pales 12, cet arbre de sortie 13' se rétractant lorsque la deuxième chambre 13"' se remplit pour par exemple réduire le deuxième pas des deuxièmes pales 12.

On note que l'aéronef peut comporter un vérin parallèle 64, agencé en parallèle de la liaison reliant le vérin de commande 55 et le moyen de commutation 42.

Ce vérin parallèle 64 peut être relié à un système de pilotage automatique 63. Ce système de pilotage automatique 63 peut requérir une modification du deuxième pas via ledit organe 64, sur ordre de l'unité logique 60 éventuellement.

L'unité logique 60 peut aussi être reliée directement au vérin parallèle 64 pour requérir une augmentation du deuxième pas lors du passage du mode de fonctionnement anticouple au mode de fonctionnement propulsif, ou une diminution du deuxième pas lors du passage du mode de fonctionnement propulsif au mode de fonctionnement anticouple.

Par ailleurs, la deuxième voie 42" est reliée au moyen de pivotement 14, via l'unité logique 60 par exemple.

Le moyen de commutation 42 comporte alors un corps pourvu d'une première portion 44 et d'une deuxième portion 45, ce corps coopérant avec un ressort 46 et un moyen de translation 43 de type vérin commandé par l'unité logique 60.

En référence à la figure 6, durant le mode fonctionnement anticouple, le moyen de translation 43 est rétracté afin d'interposé la première portion 44 entre d'une part les première et deuxième voies de sortie 42', 42", et d'autre part les premier et deuxième codeurs 51, 53.

Plus précisément, la première portion 44 met en relation la première porte logique 51 et la première voie de sortie 42', la première portion 44 mettant aussi en relation la deuxième porte logique 53 et la deuxième voie de sortie 42".

Dès lors, le premier moyen de commande 31 agit sur le deuxième pas des deuxièmes pales 12 via la servocommande 13. Par contre, l'interrupteur 52 étant ouvert, le deuxième moyen de commande 32 est inactif, ce deuxième moyen de commande 32 ne transmettant de fait pas d'ordre de pivotement au rotor arrière 10.

En référence à la figure 7, durant le mode fonctionnement propulsif, le moyen de translation 43 est étendu afin d'interposer la deuxième portion 45 entre d'une part les première et deuxième voies de sortie 42', 42", et d'autre part les premier et deuxième codeurs 51, 53.

Plus précisément, la deuxième portion 45 met en relation la deuxième porte logique 53 et la première voie de sortie 42', la deuxième portion 45 mettant aussi en relation la première porte logique 51 et la deuxième voie de sortie 42".

Dès lors, le premier moyen de commande 31 agit sur la position angulaire du rotor arrière 10 par rapport au premier plan P1. De plus, l'interrupteur 52 étant fermé, le deuxième moyen de commande 32 devient actif, ce deuxième moyen de commande 32 contrôlant le deuxième pas des deuxièmes pales 12 via la servocommande 13.

Il est à noter que le moyen de commutation 42 peut aussi être un commutateur électronique aiguillant les ordres des premier et deuxième moyens de commande en fonction d'un ordre donné par l'unité logique 60.

Pour passer du mode de fonctionnement anticouple au mode fonctionnement propulsif, un pilote manoeuvre le bouton de transition 41. Ce bouton de transition 41 bascule alors l'interrupteur 52 en position fermée et alimente électriquement le moyen de pivotement 14. De plus, le bouton de transition 41 active l'unité logique 60 pour requérir le début de la phase de transition permettant de passer d'un mode de fonctionnement à l'autre.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour piloter un aéronef (1) muni d'au moins une voilure tournante (2) comportant une pluralité de premières pales (3) ayant un premier pas variable afin d'assurer au moins la portance de l'aéronef (1), ledit aéronef (1) étant muni d'un rotor arrière (10) apte à pivoter pour passer de manière réversible d'un mode de fonctionnement anticouple durant lequel ledit rotor arrière est apte à contrôler le mouvement en lacet dudit aéronef (1) à un mode de fonctionnement propulsif durant lequel ledit rotor arrière (10) est apte à pivoter autour d'un axe de basculement (11) pour contrôler le mouvement en lacet de façon vectorielle de part et d'autre d'un premier plan (P1) antéropostérieur de symétrie de l'aéronef (1) et pour contrôler au moins partiellement la propulsion dudit aéronef (1), ledit rotor arrière (10) comportant une pluralité de deuxièmes pales (12) ayant un deuxième pas variable et effectuant une rotation autour d'un axe de rotation (AX), ledit axe de rotation présentant un premier angle saillant (θ) variable avec ledit premier plan (P1),
**caractérisé en ce que** :
- durant le mode de fonctionnement anticouple, on contrôle ledit deuxième pas à l'aide d'un premier moyen de commande (31),
- durant le mode de fonctionnement propulsif, on contrôle ledit premier angle saillant (θ) à l'aide dudit premier moyen de commande (31) et on contrôle ledit deuxième pas à l'aide d'un deuxième moyen de commande (32),
et **en ce que** lorsqu'un pivotement du rotor arrière (10) est requis pour passer d'un mode de fonctionnement anticouple à un mode de fonctionnement propulsif, on réduit progressivement ledit premier pas.

2. Procédé selon la revendication 1,
**caractérisé en ce que** lorsqu'un pivotement du rotor arrière (10) est requis pour passer d'un mode de fonctionnement à un autre, on passe du mode de fonctionnement anticouple au mode de fonctionnement propulsif quand ledit premier angle saillant (θ) devient inférieur à un seuil prédéterminé (α) et on passe du mode de fonctionnement propulsif au mode de fonctionnement anticouple quand ledit premier angle saillant (θ) devient supérieur audit seuil prédéterminé (α).

3. Procédé selon l'une quelconque des revendications 1 à 2,
**caractérisé en ce que** l'on désactive ledit deuxième moyen de commande (32) durant le mode de fonctionnement anticouple.

4. Procédé selon l'une quelconque des revendications 1 à 3,
**caractérisé en ce que** lorsqu'un pivotement du rotor arrière (10) est requis pour passer d'un mode de fonctionnement anticouple à un mode de fonctionnement propulsif, ledit aéronef (1) ayant une vitesse d'avancement donnée lorsque ledit pivotement est requis, on augmente progressivement le deuxième pas pour maintenir ledit aéronef (1) à une vitesse d'avancement supérieure ou égale à ladite vitesse d'avancement donnée.

5. Procédé selon l'une quelconque des revendications 1 à 4,
**caractérisé en ce que** lorsqu'un pivotement du rotor arrière (10) est requis pour passer d'un mode de fonctionnement anticouple à un mode de fonctionnement propulsif, on procède à la diminution dudit premier angle saillant (θ) automatiquement jusqu'à un angle donné (ε) inférieure audit seuil prédéterminé (α) pour lequel le mouvement en lacet dudit aéronef est nul.

6. Procédé selon la revendication 5,
**caractérisé en ce que** l'on interrompt ladite diminution lorsque l'attitude en lacet dudit aéronef (1) est modifiée.

7. Procédé selon l'une quelconque des revendications 1 à 6,
**caractérisé en ce que** l'on autorise le pivotement du rotor arrière (10) pour passer d'un mode de fonctionnement anticouple à un mode de fonctionnement propulsif si la vitesse d'avancement dudit aéronef (1) est supérieure à une vitesse de transition minimale.

8. Procédé selon l'une quelconque des revendications 1 à 7,
**caractérisé en ce que** l'on pilote au moins une surface portante (6, 7) en élévation de part et d'autre dudit premier plan (P1).

9. Aéronef (1) apte à mettre en oeuvre le procédé selon l'une quelconque des revendications précédentes, ledit aéronef (1) étant muni d'une cellule (4) portant au moins une voilure tournante (2) comportant une pluralité de premières pales (3) ayant un premier pas variable et d'un rotor arrière (10) apte à pivoter pour passer de manière réversible d'un mode de fonctionnement anticouple durant lequel ledit rotor arrière (10) est apte à contrôler le lacet dudit aéronef (1) à un mode de fonctionnement propulsif par poussée vectorielle de part et d'autre d'un premier plan (P1) antéropostérieur de symétrie dudit aéronef durant lequel ledit rotor arrière est apte à pivoter autour d'un axe de basculement (11) pour contrôler le lacet et pour contrôler au moins partiellement la propulsion dudit aéronef (1), ledit rotor arrière (10) comportant une pluralité de deuxièmes pales (12) ayant un deuxième pas variable et effectuant une rotation autour d'un axe de rotation (AX), ledit axe de rotation (AX) présentant un premier angle saillant (θ) variable avec ledit premier plan (P1),
**caractérisé en ce qu'**il comporte :
- une boîte de transmission arrière (20) de puissance pourvue d'une partie fixe (21) solidarisée à ladite cellule (4) et d'une partie mobile (22) liée audit rotor arrière (10) pour permettre le pivotement de ce rotor arrière (10),
- un moyen de pivotement (14) de ladite partie mobile (22),
- un premier moyen de commande (31) contrôlant ledit deuxième pas durant le mode de fonctionnement anticouple et ledit moyen de pivotement (14) durant le mode de fonctionnement propulsif,
- un deuxième moyen de commande (32) contrôlant ledit deuxième pas durant le mode de fonctionnement propulsif,
- un dispositif de commutation (40) pour passer d'un mode de fonctionnement à l'autre,
- une unité logique (60) pour réduire progressivement ledit premier pas lorsqu'un pivotement du rotor arrière (10) est requis pour passer d'un mode de fonctionnement anticouple à un mode de fonctionnement propulsif.

10. Aéronef selon la revendication 9,
**caractérisé en ce que** ledit dispositif de commutation (40) comporte un bouton de transition (41) pour requérir le passage d'un mode de fonctionnement à l'autre.

11. Aéronef l'une quelconque des revendications 9 à 10, **caractérisé en ce que** ledit dispositif de commutation (40) comporte un moyen de commutation (42) mettant en relation :
- durant le mode de fonctionnement anticouple, ledit premier moyen de commande (31) et un moyen de modification (13) dudit deuxième pas
- durant le mode de fonctionnement propulsif, ledit deuxième moyen de commande (32) et ledit moyen de modification (13) dudit deuxième pas, et
- durant le mode de fonctionnement propulsif, ledit premier moyen de commande (31) et ledit moyen de pivotement (14).

12. Aéronef selon l'une quelconque des revendications 9 à 11,
**caractérisé en ce qu'**il comporte un capteur angulaire (15) pour mesurer ledit premier angle saillant (θ).

13. Aéronef selon l'une quelconque des revendications 9 à 12,
**caractérisé en ce qu'**il comporte indifféremment au moins une surface portante (6, 8) en élévation présentant un deuxième angle saillant variable avec ledit premier plan (P1).

## Claims

1. A method for piloting an aircraft (1) equipped with at least one rotary wing (2) that includes a plurality of first blades (3) of a first variable pitch, in order to ensure at least lift of the aircraft (1), the said aircraft (1) being equipped with a tail rotor (10) suitable for pivoting, to move reversibly from an anti-torque operating mode, during which the said tail rotor is suitable for controlling yaw movement of the said aircraft (1), to a thrust operating mode, during which the said tail rotor (10) is suitable for pivoting about a tilt axis (11) for controlling the vectored yaw movement on either side of a first anteroposterior plane (P1) of symmetry of the aircraft (1) and for at least partly controlling the thrust of the said aircraft (1), wherein the said tail rotor (10) includes a plurality of second blades (12) of a second variable pitch, which rotate about an axis of rotation (AX), wherein the said axis of rotation is at a first variable external angle (θ) to the said first plane (P1),
**characterised in that**:
- during the anti-torque operating mode, the said second pitch is controlled with the aid of a first control means (31),
- during the thrust operating mode, the said first external angle (θ) is controlled with the aid of the said first control means (31) and the said second pitch is controlled with the aid of a second control means (32),
and **in that** when the tail rotor (10) is required to pivot in order to move from an anti-torque operating mode to a thrust operating mode, the said first pitch is progressively reduced.

2. A method according to claim 1, **characterised in that** when the tail rotor (10) is required to pivot in order to move from one operating mode to the other, it moves from the anti-torque operating mode to the thrust operating mode when the said first external angle (θ) falls below a predetermined threshold (α), and it moves from the thrust operating mode to the anti-torque operating mode when the said first external angle (θ) exceeds the said predetermined threshold (α).

3. A method according to either of claims 1 and 2, **characterised in that** the said second control means (32) is disabled during the anti-torque operating mode.

4. A method according to any one of claims 1 to 3, **characterised in that** when the tail rotor (10) is required to pivot in order to move from an anti-torque operating mode to a thrust operating mode, the said aircraft (1) having a given forward speed when the said pivoting is required, the second pitch is progressively increased to keep the said aircraft (1) at a forward speed greater than or equal to the said given forward speed.

5. A method according to any one of claims 1 to 4, **characterised in that** when the tail rotor (10) is required to pivot in order to move from an anti-torque operating mode to a thrust operating mode, a reduction of the said first external angle (θ) is performed automatically until it reaches a given angle (ε) smaller than the said predetermined threshold (α) for which the yaw movement of the said aircraft is zero.

6. A method according to claim 5, **characterised in that** the said reduction is interrupted when the yaw attitude of the said aircraft (1) is modified.

7. A method according to any one of claims 1 to 6, **characterised in that** pivoting of the tail rotor (10) is authorised in order to move from an anti-torque operating mode to a thrust operating mode if the forward speed of the said aircraft (1) is greater than a minimum transition speed.

8. A method according to any one of claims 1 to 7, **characterised in that** at least one bearing surface (6, 7) raised on either side of the said first plane (P1) is controlled.

9. An aircraft (1) suitable for implementing the method according to any one of the preceding claims, wherein the said aircraft (1) is equipped with a cell (4) which bears at least one rotary wing (2) that includes a plurality of first blades (3) of a first variable pitch, and a tail rotor (10) suitable for pivoting, to move reversibly from an anti-torque operating mode, during which the said tail rotor (10) is suitable for controlling the yaw of the said aircraft (1), to a thrust operating mode of vectored thrust on either side of a first anteroposterior plane (P1) of symmetry of the said aircraft, during which the said tail rotor is suitable for pivoting about a tilt axis (11) in order to control yaw and in order to at least partly control the thrust of the said aircraft (1), wherein the said tail rotor (10) includes a plurality of second blades (12) of a second variable pitch, which rotate about an axis of rotation (AX), wherein the said axis of rotation (AX) is at a first variable external angle (θ) to the said first plane (P1), **characterised in that** it includes:
- a rear power transmission box (20) provided with a fixed part (21), which is integral with the said cell (4), and a movable part (22), which is connected to the said tail rotor (10) in order to allow this tail rotor (10) to pivot,
- a means (14) for pivoting the said movable part (22),
- a first control means (31) which controls the said second pitch during the anti-torque operating mode and the said pivot means (14) during the thrust operating mode,
- a second control means (32) controlling the said second pitch during the thrust operating mode,
- a switching device (40) for moving from one operating mode to the other,
- a logic unit (60) for progressively reducing the said first pitch when the tail rotor (10) is required to pivot in order to move from an anti-torque operating mode to a thrust operating mode.

10. An aircraft according to claim 9, **characterised in that** the said switching device (40) includes a transition button (41) for requiring movement from one operating mode to the other.

11. An aircraft according to either of claims 9 and 10, **characterised in that** the said switching device (40) includes a switching means (42) which:
- during the anti-torque operating mode, connects the said first control means (31) and a means (13) for modifying the said second pitch,
- during the thrust operating mode, connects the said second control means (32) and the said means (13) for modifying the said second pitch, and
- during the thrust operating mode, connects the said first control means (31) and the said pivot means (14).

12. An aircraft according to any one of claims 9 to 11, **characterised in that** it includes an angle sensor (15) for measuring the said first external angle (θ).

13. An aircraft according to any one of claims 9 to 12, **characterised in that** it includes one or more raised bearing surfaces (6, 8) at a second variable external angle to the said first plane (P1).

## Patentansprüche

1. Verfahren zum Lenken eines Luftfahrzeugs (1) mit mindestens einem Drehflügel (2) mit einer Mehrzahl erster Rotorblätter (3) mit einem ersten variablen Anstellwinkel, um mindestens den Auftrieb des Luftfahrzeugs (1) sicherzustellen, wobei das Luftfahrzeug (1) mit einem Heckrotor (10) versehen ist, der verschwenkbar ist, um reversibel von einem Gegendrehmoment-Betriebsmodus, in dem der Heckrotor die Kehrbewegung des Luftfahrzeugs (1) steuern kann, überzugehen zu einem Vortriebs-Betriebsmodus, in dem der Heckrotor (10) um eine Kippachse (11) verschwenkbar ist, um die Kehrbewegung vektoriell zu beiden Seiten einer ersten Längssymmetrieebene (P1) des Luftfahrzeugs (1) zu steuern, und um zumindest teilweise den Vortrieb des Luftfahrzeugs (I) zu steuern, wobei der Heckrotor (10) eine Mehrzahl zweiter Rotorblätter (12) aufweist mit einem zweiten variablen Anstellwinkel, und wobei der Heckrotor (10) eine Drehung um eine Drehachse (AX) ausführt, wobei die Drehachse einen ersten variablen spitzen Winkel (θ) mit der ersten Ebene (P1) einschließt,
**dadurch gekennzeichnet, dass**:
- während des Gegendrehmoment-Betriebsmodus der zweite Anstellwinkel mit einem ersten Steuermittel (31) gesteuert wird,
- während des Vortriebs-Betriebsmodus der erste spitze Winkel (θ) mit dem ersten Steuermittel (31) gesteuert wird und der zweite Anstellwinkel mit einem zweiten Steuermittel (32) gesteuert wird,
und **dadurch**, dass, wenn ein Verschwenken des Heckrotors (10) erforderlich ist, um von einem Gegendrehmoment-Betriebsmodus überzugehen in den Vortriebs-Betriebsmodus schrittweise der erste Anstellwinkel reduziert wird.

2. Verfahren nach Anspruch 1,
**dadurch gekennzeichnet, dass**, wenn ein Verschwenken des Heckrotors (10) erforderlich ist, um von einem Betriebsmodus in den anderen überzugehen, von dem Gegendrehmoment-Betriebsmodus übergegangen wird auf den Vortriebs-Betriebsmodus, wenn der erste spitze Winkel (θ) kleiner wird als ein vorbestimmter Schwellenwert (□), und von dem Vortriebs-Betriebsmodus auf den Gegendrehmoment-Betriebsmodus übergegangen wird, wenn der erste spitze Winkel (θ) größer wird als der vorgegebene Schwellenwert (□).

3. Verfahren nach einem der Ansprüche 1 oder 2,
**dadurch gekennzeichnet, dass** während des Gegendrehmoment-Betriebsmodus das zweite Steuermittel (32) deaktiviert wird.

4. Verfahren nach einem der Ansprüche 1 bis 3,
**dadurch gekennzeichnet, dass**, wenn ein Verschwenken des Heckrotors (10) erforderlich ist, um von einem Gegendrehmoment-Betriebsmodus überzugehen auf einen Vortriebs-Betriebsmodus, und das Luftfahrzeug (1) eine gegebene Vortriebsgeschwindigkeit aufweist, wenn das Verschwenken erforderlich ist, schrittweise der zweite Anstellwinkel erhöht wird, um das Luftfahrzeug (1) auf einer Vortriebsgeschwindigkeit zu halten, die größer oder gleich der vorgegebenen Vortriebsgeschwindigkeit ist.

5. Verfahren nach einem der Ansprüche 1 bis 4,
**dadurch gekennzeichnet, dass**, wenn ein Verschwenken des Heckrotors (10) erforderlich ist, um von einem Gegendrehmoment-Betriebsmodus überzugehen auf einen Vortriebs-Betriebsmodus, der erste spitze Winkel (θ) automatisch verkleinert wird bis auf einen gegebenen Winkel (ε), der kleiner ist als der vorgegebene Schwellenwert (□), für den die Kehrbewegung des Luftfahrzeugs gleich Null ist.

6. Verfahren nach Anspruch 5,
**dadurch gekennzeichnet, dass** die Verkleinerung unterbrochen wird, wenn die Kehrbewegung des Luftfahrzeugs (1) verändert wird.

7. Verfahren nach einem der Ansprüche 1 bis 6,
**dadurch gekennzeichnet, dass** das Verschwenken des Heckrotors (10) für den Übergang von einem Gegendrehmoment-Betriebsmodus zu einem Vortriebs-Betriebsmodus autorisiert wird, wenn die Vortriebsgeschwindigkeit des Luftfahrzeugs (1) größer ist als eine minimale Übergangsgeschwindigkeit.

8. Verfahren nach einem der Ansprüche 1 bis 7,
**dadurch gekennzeichnet, dass** mindestens eine in Höhenrichtung ragende Fläche zu beiden Seiten der ersten Ebene (P1) gesteuert wird.

9. Luftfahrzeug (1) zur Durchführung des Verfahrens nach einem der vorstehenden Ansprüche, wobei das Luftfahrzeug (1) einen Rumpf (4) aufweist, der mindestens einen Drehflügel (2) trägt mit einer Mehrzahl erster Rotorblätter (3) mit einem ersten variablen Anstellwinkel und mit einem Heckrotor (10), der verschwenkbar ist, um reversibel von einem Gegendrehmoment-Betriebsmodus, in dem der Heckrotor (10) die Kehrbewegung des Luftfahrzeugs (1) steuern kann, überzugehen zu einem Vortriebs-Betriebsmodus durch vektoriellen Schub zu beiden Seiten einer ersten Längssymmetrieachse (P1) des Luftfahrzeugs, in dem der Heckrotor um eine Kippachse (11) schwenken kann, um die Kehrbewegung zu steuern und um mindestens teilsweise den Vortrieb des Luftfahrzeugs (1) zu steuern, wobei der Heckrotor (10) eine Mehrzahl zweiter Rotorblätter (12) aufweist mit einem zweiten variablen Anstellwinkel, und wobei der Heckrotor eine Drehung um eine Drehachse (AX) ausführt, wobei die Drehachse (AX) einen variablen spitzen Winkel (θ) mit der ersten Ebene (P1) einnimmt,
**gekennzeichnet durch**:
- ein hinteres Leistungsgetriebe (20) mit einem festen Teil (21), der am Rumpf (4) befestigt ist, und einem beweglichen Teil (22), der mit dem Heckrotor (10) gekoppelt ist, um das Verschwenken des Heckrotors (10) zu ermöglichen,
- ein Mittel (14) zum Verschwenken des beweglichen Teils (22),
- ein erstes Steuermittel (31), welches den zweiten Anstellwinkel während des Gegendrehmoment-Betriebsmodus und das Schwenkmittel (14) während des Vortriebs-Betriebsmodus steuert,
- ein zweites Steuermittel (32), welches den zweiten Anstellwinkel während des Vortriebs-Betriebsmodus steuert,
- eine Umschaltvorrichtung (40) zum Übergehen von einem Betriebsmodus in den anderen,
- eine Logikeinheit (60) zum schrittweisen Reduzieren des ersten Anstellwinkels, wenn ein Verschwenken des Heckrotors (10) erforderlich ist, um von einem Gegendrehmoment-Betriebsmodus überzugehen auf einen Vortriebs-Betriebsmodus.

10. Luftfahrzeug nach Anspruch 9,
**dadurch gekennzeichnet, dass** die Schaltvorrichtung (40) einen Übergangsschaltknopf (41) aufweist zum Anfordern des Übergangs von einem Betriebsmodus in den anderen.

11. Luftfahrzeug nach einem der Ansprüche 9 oder 10,
**dadurch gekennzeichnet, dass** die Schaltvorrichtung (40) ein Schaltmittel (42) aufweist, welches in Verbindung bringt:
- während des Gegendrehmoment-Betriebsmodus das erste Steuermittel (31) und ein Mittel (13) zum Verändern des zweiten Anstellwinkels,
- während des Vortriebs-Betriebsmodus das zweite Steuermittel (32) mit dem Mittel (13) zum Verändern des zweiten Anstellwinkels, und
- während des Vortriebs-Betriebsmodus das erste Steuermittel (31) und das Schwenkmittel (14).

12. Luftfahrzeug nach einem der Ansprüche 9 bis 11,
**gekennzeichnet durch** einen Winkelsensor (15) zum Messen des ersten spitzen Winkels (θ).

13. Luftfahrzeug nach einem der Ansprüche 9 bis 12,
**gekennzeichnet durch** mindestens eine aufrechte Fläche (6, 8), die einen zweiten variablen spitzen Winkel mit der ersten Ebene (P1) einnimmt.
